# FASCICULE DE BREVET EUROPEEN

(11) **EP 1 817 751 B1**
(45) Date de publication et mention de la délivrance du brevet: **20.11.2013**
(21) Numéro de dépôt: 05811000.8
(22) Date de dépôt: 28.11.2005
(51) Int. Cl.: G07F 7/10, G06K 7/00, G06F 21/00

(54) **TERMINAL POUR EFFECTUER DES TRANSACTIONS ÉLECTRONIQUES**
ENDGERÄT ZUR DURCHFÜHRUNG ELEKTRONISCHER TRANSAKTIONEN
TERMINAL FOR PERFORMING ELECTRONIC TRANSACTIONS

(30) Priorité: 03.12.2004 FR 0412893; 08.07.2005 FR 0507324
(43) Date de publication de la demande: 15.08.2007
(73) Titulaire: THALES, 92200 Neuilly sur Seine (FR)
(72) Inventeur: SOUFFLET, Jérôme, F-92100 Boulogne Billancourt (FR)
(74) Mandataire: Lucas, Laurent Jacques
(86) Numéro de dépôt international: PCT/EP2005/056270
(87) Numéro de publication internationale: WO 2006/058873

(56) Documents cités:
- EP-A- 1 553 518
- WO-A-89/00318
- FR-A- 2 806 175
- US-A- 6 016 476
- US-A1- 2004 226 999

## Description

La présente invention concerne le domaine des transactions électroniques, notamment du paiement électronique. Elle s'applique à un terminal doté d'un écran, d'un processeur et d'un système d'exploitation, de type assistant électronique personnel ou PDA par exemple (acronyme de l'expression anglo-saxonne "Personal Digital Assistant").

Les assistants électroniques personnels sont des dispositifs équipés d'un microprocesseur et d'un écran de visualisation à dalle tactile. Ils disposent par ailleurs d'un système d'exploitation, permettant d'ajouter des fonctions logicielles pour les personnaliser à des besoins particuliers. Cette possibilité fait que leur utilisation se généralise à des applications de plus en plus variées, et notamment des applications professionnelles.

Toutefois, l'utilisation de ces terminaux dans des applications de transactions électroniques est freinée par le manque de sécurité, lié précisément à leur possibilité de personnalisation.

Le document FR 2806175 dévoile un dispositif du type que la présente invention se propose d'améliorer et comprend les caractéristiques du préambule de la revendication 1.

Par exemple, il n'est pas envisageable aujourd'hui d'utiliser un assistant électronique personnel dans une application de paiement électronique. En effet, on pourrait facilement ajouter une fonction logicielle pirate affichant à l'écran des images reproduisant un clavier virtuel pour demander la saisie d'un code confidentiel. L'exécution de cette fonction logicielle pirate ne pourrait pas être empêchée par le système d'exploitation du terminal, car il n'est pas possible en pratique de contrôler de façon efficace les images affichées à l'écran. Il serait ainsi possible à n'importe qui d'obtenir des codes confidentiels, ou plus généralement des informations confidentielles.

Un but de l'invention est notamment de permettre l'utilisation d'un terminal comportant notamment un écran, un processeur, un système d'exploitation, des moyens de saisie et un lecteur de carte pour une application de transaction électronique, tout en garantissant la sécurité requise dans ce type d'application. Il peut s'agir par exemple d'un assistant personnel ou encore d'un téléphone portable.

A cet effet, l'invention a pour objet un terminal comportant au moins un écran, un processeur et un système d'exploitation. Il comporte de plus deux modes de fonctionnement : un premier mode de fonctionnement dans lequel des fonctions de transaction électronique du terminal sont inhibées, et un second mode de fonctionnement dans lequel les fonctions de transaction électronique sont activées. Le terminal comporte un support sur lequel est monté un clavier mécanique destiné à saisir des informations confidentielles. Une partie de l'écran est masquée lorsque les fonctions de transaction électronique sont activées.

Dans un mode de réalisation, le support présente au moins deux positions. Le mouvement du support d'une position à une autre fait passer le terminal d'un mode de fonctionnement à un autre. Le support masque une partie de l'écran lorsque les fonctions de transaction électronique sont activées.

Dans un autre mode de réalisation, le support comporte un lecteur de carte. Une partie de l'écran est masquée soit par une carte introduite par l'utilisateur dans le lecteur de carte du support soit par le support et par une carte introduite dans le lecteur de carte du support.

Le support peut par exemple être un support mobile en rotation. Dans ce cas, le support peut être en rotation autour d'un axe perpendiculaire à l'écran. Il peut aussi être en rotation autour d'un axe parallèle à l'écran.

Le support peut encore être un support mobile en translation. Dans ce cas, le support peut être n translation contrainte par au moins un guide parallèle à l'écran.

Avantageusement, le terminal de transaction peut comporter :
- un microprocesseur sécurisé destiné à traiter des données confidentielles,
- un microprocesseur principal applicatif, destiné à traiter des données non confidentielles,
- un commutateur comprenant au moins deux positions, une première position dans laquelle l'écran est relié fonctionnellement au microprocesseur sécurisé pour afficher des images transmises par le microprocesseur sécurisé, et une seconde position dans laquelle l'écran est relié fonctionnellement au microprocesseur principal applicatif pour afficher des images transmises par le microprocesseur principal applicatif, le commutateur étant relié au support de manière à être dans la première position lorsque les fonctions de transaction électronique sont activées, et dans la seconde position lorsque les fonctions de transaction électronique sont inhibées.

Dans un autre mode de réalisation, le support comporte un lecteur de carte, le fonctionnement du lecteur de carte du support étant inhibé lorsque les fonctions de transaction électronique sont inhibées. Le lecteur de carte du support peut encore être inhibé en bloquant l'entrée de la carte au moyen d'une plaque fixée au corps du terminal pour obturer l'entrée de la carte à puce lorsque le support est dans la position dans laquelle les fonctions de transaction électronique sont inhibées.

D'autres caractéristiques et avantages de l'invention apparaîtront à la lecture de la description détaillée suivante présentée à titre d'illustration non limitative et faite en référence aux figures annexées, lesquelles représentent :
- la figure 1, un terminal à dalle tactile de type assistant personnel ;
- la figure 2a, un exemple de mise en oeuvre d'un terminal selon l'invention ;
- la figure 2b, un autre exemple de mise en oeuvre d'un terminal selon l'invention ;
- la figure 2c, un troisième exemple de mise en oeuvre d'un terminal selon l'invention ;
- la figure 3a, une vue de côté du terminal équipé d'un support, le support articulé étant rabattu au dos du terminal ;
- la figure 3b, une vue de côté du terminal équipé d'un support articulé, le support articulé masquant une partie de la l'écran à dalle tactile ;
- la figure 3c, une vue de dessus d'un terminal équipé d'un support articulé comportant une articulation autorisant une rotation par rapport à un point ;
- la figure 3d, une vue de dessus un terminal équipé d'un support articulé comportant une articulation autorisant une translation dans le plan de l'écran ;
- la figure 3e, une vue de dessus un terminal équipé d'un support articulé comportant une articulation autorisant une rotation par rapport à un axe parallèle à l'écran ;
- la figure 4, une vue en perspective du terminal, le support articulé étant rabattu au dos du terminal.

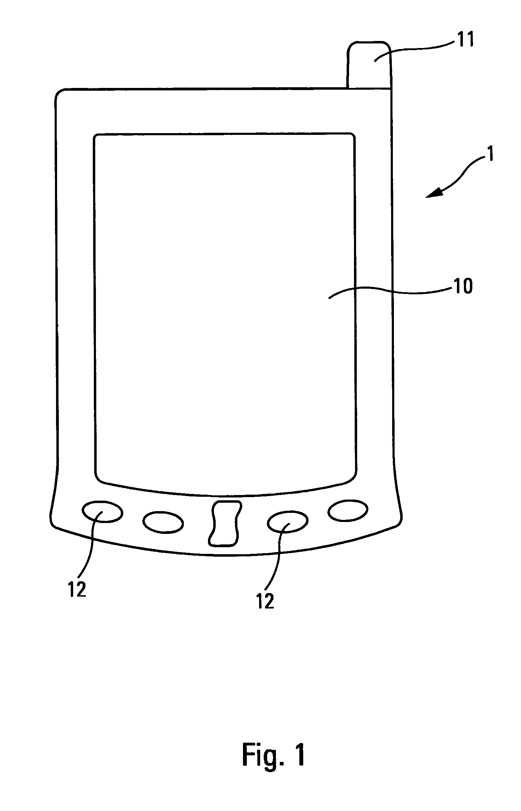

La figure 1 montre un exemple de terminal de type assistant personnel. Le terminal 1 comporte un écran 10. Il peut s'agir par exemple d'un écran couleur. L'écran peut notamment être un écran à dalle tactile, c'est à dire capable de localiser une zone de l'écran sur laquelle une pression est susceptible d'être exercée. Le terminal peut présenter des touches 12 de navigation et/ou de saisie. Par ailleurs, le terminal peut être équipé de moyens de communications, notamment d'une antenne 11 pour échanger des signaux radioélectriques, répondant aux différentes normes de communications parmi lesquelles figurent Bluetooth, WIFI, GSM/GPRS/UMTS. La figure 1 montre un assistant personnel. Cependant, l'invention s'applique à tout terminal comportant au moins un écran, des moyens de saisie, un processeur, et un système d'exploitation.

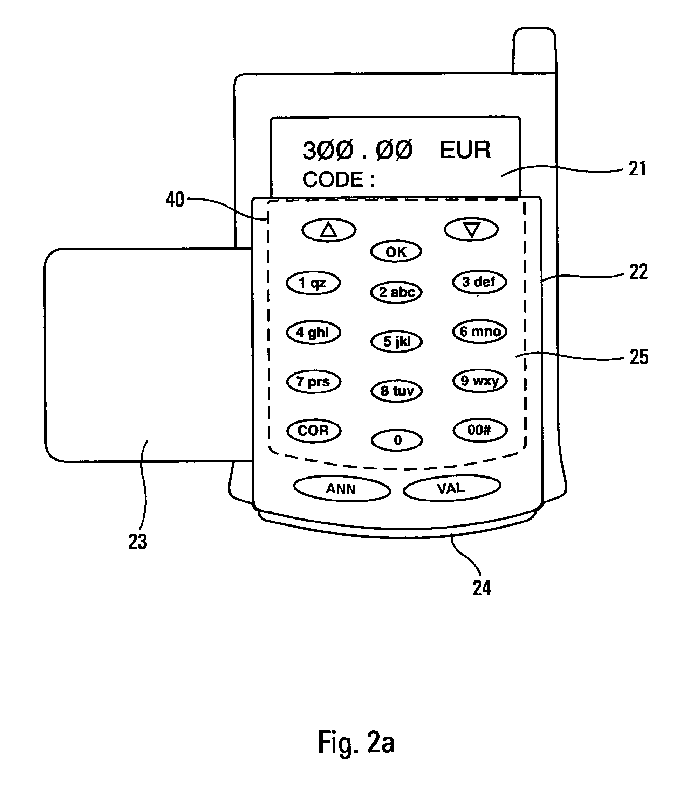

La figure 2a illustre un exemple de mise en oeuvre de l'invention. Le terminal 1 est équipé d'un support 22. Dans cet exemple, le support 22 masque une partie 40 de l'écran. Dans cette position du support, les fonctions de transactions électroniques sont activées. Le support 22 peut notamment comporter un lecteur de carte comportant une fente. Sur la figure 2a, le lecteur de carte est positionné sur la partie latérale gauche du support 22. Une carte 23, par exemple une carte bancaire dotée d'une puce électronique, peut être insérée dans la fente du lecteur de carte.

Dans cette position, une partie 21 de l'écran à dalle tactile peut rester visible. Par exemple, la partie visible peut permettre d'afficher deux lignes de texte. Les fonctions de transactions électroniques peuvent alors afficher des messages sur cette partie de l'écran, tel qu'une invitation à saisir un code confidentiel.

Le terminal comporte en outre un clavier mécanique 25. Ce clavier est monté sur le support 22. Il est placé sur la partie masquée de l'écran lorsque les fonctions de transaction électronique sont activées. Ce clavier permet de saisir un code confidentiel par exemple.

Le support 22 peut être animé d'un mouvement de translation ou de rotation grâce à une liaison articulée 24 entre le support 22 et le terminal 1.

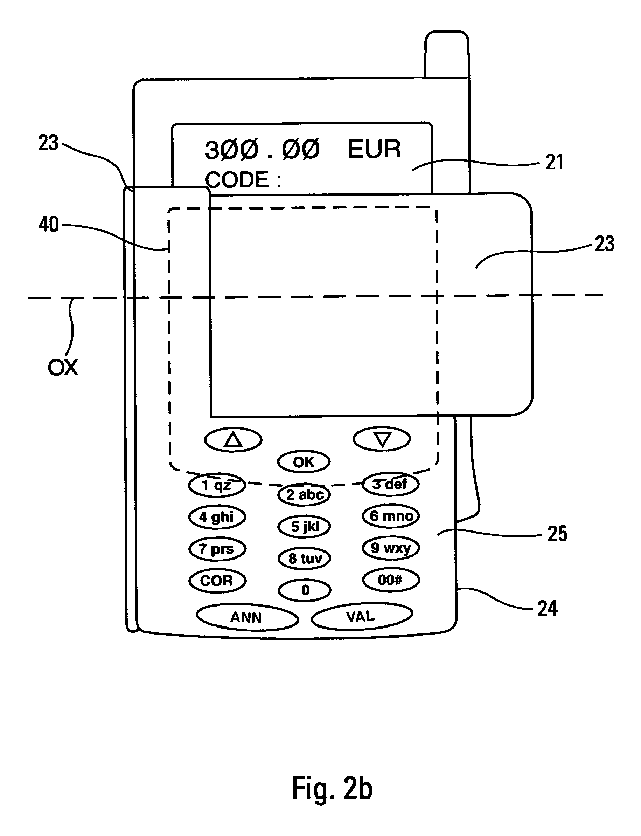

La figure 2b représente un autre exemple de mise en oeuvre de l'invention. Les éléments identiques aux éléments déjà présentés à la figure 2a portent les mêmes références. Dans cet autre exemple, le support 22 est pourvu d'un lecteur de carte. Le support 22 peut être animé d'un mouvement de translation ou de rotation grâce à une liaison articulée 24 entre le support 22 et le terminal 1. Dans une configuration particulière, le support 22 se positionne sur la face avant du terminal 1. Le lecteur de carte est disposé de telle sorte que, dans cette configuration particulière du support 22, l'insertion d'une carte masque la partie 40 de l'écran. Dans cette configuration particulière du support 22, les fonctions de transactions électroniques sont activées si une carte 23 est insérée dans le lecteur de carte du support 22. En revanche, lorsque qu'aucune carte 23 n'est introduite dans le lecteur de carte du support 22, la partie 40 de l'écran 10 n'est pas totalement masquée et les fonctions de transactions électroniques ne sont pas activées. De même, dans d'autres configurations où le support 22 n'est pas positionné sur la face avant du terminal 1, l'insertion d'une carte ne masque pas totalement la partie 40 de l'écran 10 : les fonctions de transactions électroniques ne sont pas activées.

Sur la figure 2b est représenté un axe Ox horizontal. Le terminal 1 est dans le sens de la largeur positionné parallèlement à l'axe Ox. Le lecteur de carte du support 22 comporte notamment une fente. Cette fente est disposée de telle sorte que la carte 23 insérée dans la fente est dans le sens de la longueur parallèle à l'axe Ox.

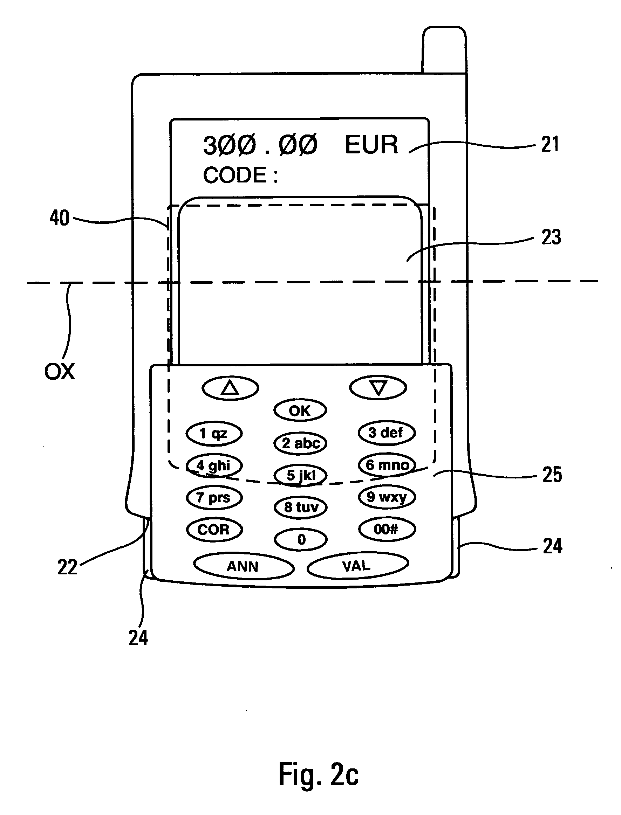

La figure 2c représente un autre exemple de mise en oeuvre de l'invention. Les éléments identiques aux éléments déjà présentés à la figure 2a et 2b portent les mêmes références. Dans cet autre exemple, le support 22 est pourvu d'un lecteur de carte. Le support peut être animé d'un mouvement de translation ou de rotation grâce à une liaison articulée 24 entre le support 22 et le terminal 1. Dans une configuration particulière, le support 22 se positionne sur la face avant du terminal 1. Le lecteur de carte est disposé de telle sorte que, dans cette configuration particulière du support 22, l'insertion d'une carte masque la partie 40 de l'écran. Dans cette configuration particulière du support 22, les fonctions de transactions électroniques sont activées si une carte 23 est insérée dans le lecteur de carte du support 22. En revanche, lorsque qu'aucune carte 23 n'est introduite dans le lecteur de carte du support 22, la partie 40 de l'écran 10 n'est pas totalement masquée et les fonctions de transactions électroniques ne sont pas activées. De même, dans d'autres configurations où le support 22 n'est pas positionné sur la face avant du terminal 1, l'insertion d'une carte ne masque pas totalement la partie 40 de l'écran 10 : les fonctions de transactions électroniques ne sont pas activées.

Sur la figure 2c est représenté un axe Ox horizontal. Le terminal 1 est dans le sens de la largeur positionné parallèlement à l'axe Ox. Le lecteur de carte du support 22 comporte notamment une fente. Cette fente est disposée de telle sorte que la carte 23 insérée dans la fente est dans le sens de la longueur perpendiculaire à l'axe Ox.

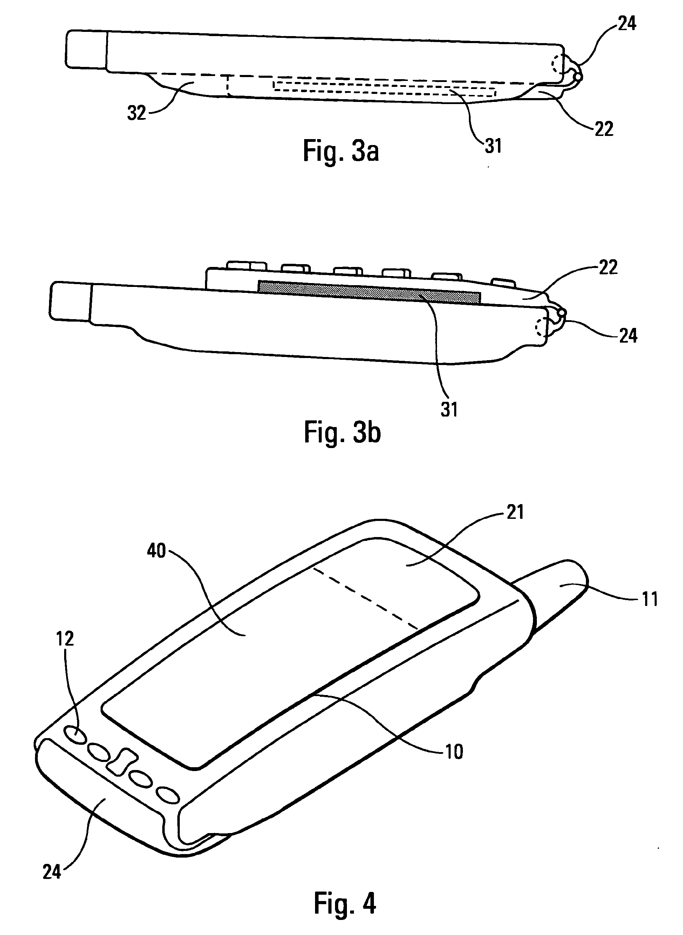

On se réfère maintenant aux figures 3a et 3b. Selon un mode de réalisation avantageux, le terminal est équipé d'un lecteur de carte à puce. Ce lecteur de carte à puce peut être placé dans le support 22 par exemple. Lorsque les fonctions de transactions électroniques sont inhibées, le lecteur de carte à puce est aussi inhibé. De cette manière, la protection contre la fraude est renforcée. Il est possible d'inhiber le lecteur de carte à puce au moyen d'un commutateur à deux positions. Une autre manière d'inhiber le lecteur est de bloquer mécaniquement l'entrée 31 de la carte à puce. Ceci est possible par exemple si une plaque 32 peut être fixée au corps du terminal pour obturer l'entrée 31 de la carte à puce lorsque le support 22 est dans la position dans laquelle les fonctions de transaction électronique sont inhibées.

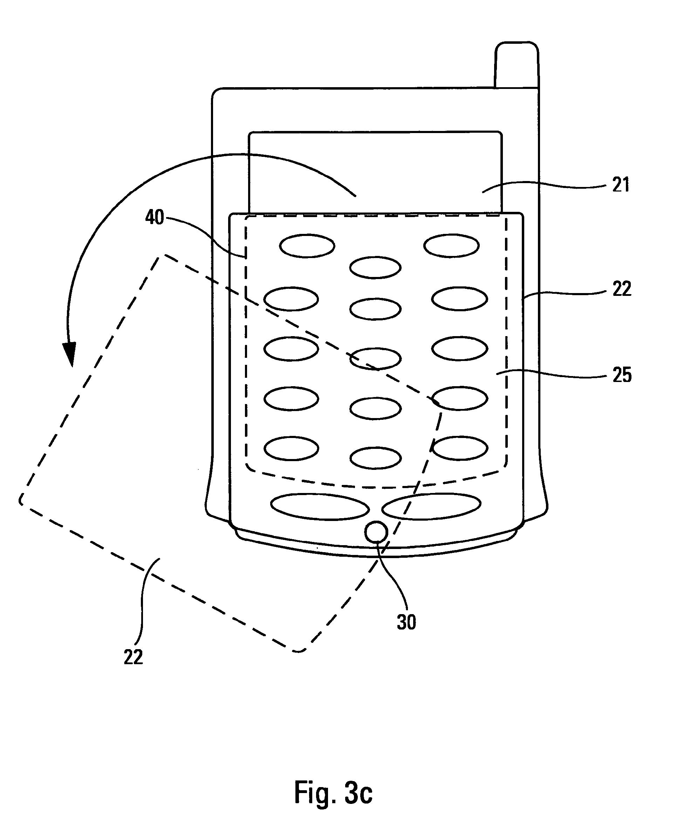

La figure 3c illustre plus particulièrement par une vue de dessus un terminal équipé d'un support 22 comportant une articulation autorisant une rotation par rapport à un point.

Le support 22 peut être animé d'un mouvement de rotation autour d'un point dans le plan parallèle à l'écran 10.

Dans un mode de réalisation, le terminal 1 comporte notamment un axe 30 perpendiculaire à l'écran 10. Le support 22 est fixé sur cet axe 30. Le support 22 peut alors être animé d'un mouvement de rotation autour de l'axe 30 dans un plan parallèle à l'écran 10. L'axe 30 est sur la figure 3c disposé au centre de la partie basse du terminal 1. Toutefois, l'axe 30 pourrait être disposé à n'importe quelle position sur le terminal 1, selon les contraintes ergonomiques qu'impose le terminal 1.

Dans un mode de réalisation, le support 22 autour de l'axe 30 permet dans une certaine position de cacher la partie 40 de l'écran 10 comme illustré sur la figure 3c.

Dans un autre mode de réalisation, le support 22 autour de l'axe 30 comporte un lecteur de carte disposé de telle sorte que, dans une configuration particulière du support 22, l'insertion d'une carte masque la partie 40 de l'écran.

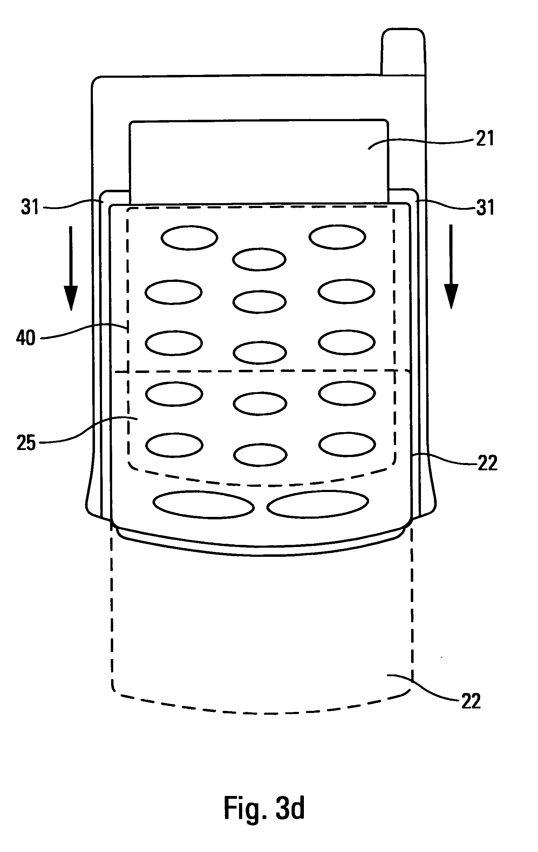

La figure 3d illustre plus particulièrement par une vue de dessus un terminal équipé d'un support 22 comportant une articulation autorisant une translation dans le plan de l'écran.

Le support 22 peut être déplacer en translation par rapport à l'écran 10 dans le plan de l'écran 10.

Dans un mode de réalisation, le terminal 1 comporte notamment des guides 31 disposés de part et d'autre de l'écran 10. Le support 22 est placé entre ces guides 31. Le support 22 peut alors être animé d'un mouvement de translation le long des guides 31 dans un plan parallèle à l'écran 10. Les guides 31 sont sur la figure 3c disposés le long de l'écran 10 dans le sens de la longueur du terminal 1. Toutefois, les guides 31 pourrait être disposés à n'importe quelle position sur le terminal 1, selon les contraintes ergonomiques qu'impose le terminal 1. Le terminal 1 peut ne comporter qu'un seul guide 31. Le mouvement de translation peut s'effectuer dans le sens de la longueur du terminal 1 ou dans le sens de la largeur du terminal 1 selon la position des guides 31.

Dans un mode de réalisation, le support 22 par rapport aux guides 31 permet dans une certaine position de cacher la partie 40 de l'écran 10 comme illustré sur la figure 3d.

Dans un autre mode de réalisation, le support 22 par rapport aux guides 31 comporte un lecteur de carte disposé de telle sorte que, dans une configuration particulière du support 22, l'insertion d'une carte masque la partie 40 de l'écran.

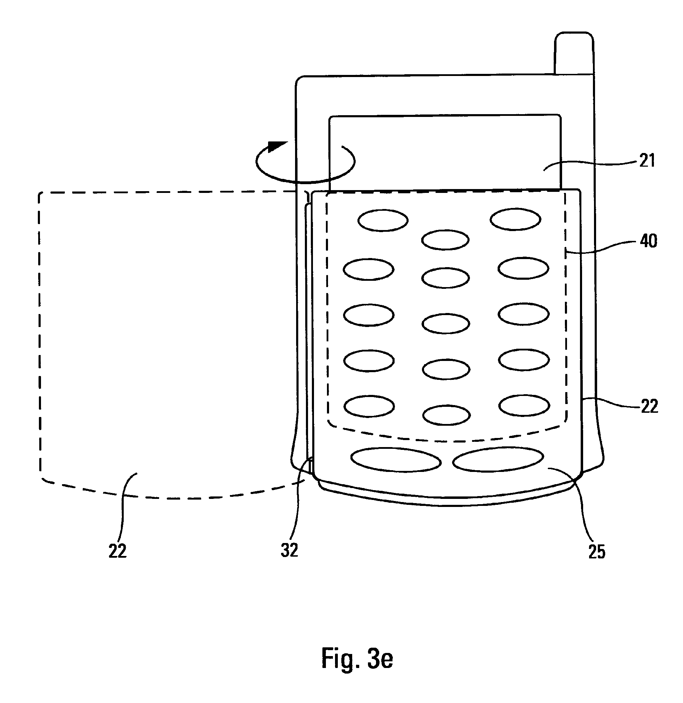

La figure 3e illustre plus particulièrement par une vue de dessus un terminal équipé d'un support 22 comportant une articulation autorisant une rotation par rapport à un axe parallèle à l'écran 10.

Le support 22 peut être animé d'un mouvement de rotation autour d'un axe parallèle à l'écran 10.

Dans un mode de réalisation, le terminal 1 comporte notamment un axe 32 parallèle à l'écran 10. Le support 22 est fixé sur cet axe 32. Le support 22 peut alors être animé d'un mouvement de rotation autour de l'axe 32. L'axe 32 est sur la figure 3c disposé sur le coté gauche du terminal 1. Toutefois, l'axe 32 pourrait être disposé à n'importe quelle position sur le terminal 1, par exemple sur la droite ou sur le bas du terminal 1, selon les contraintes ergonomiques qu'impose le terminal 1.

Dans un mode de réalisation, le support 22 autour de l'axe 32 permet dans une certaine position de cacher la partie 40 de l'écran 10 comme illustré sur la figure 3e.

Dans un autre mode de réalisation, le support 22 autour de l'axe 32 comporte un lecteur de carte disposé de telle sorte que, dans une configuration particulière du support 22, l'insertion d'une carte masque la partie 40 de l'écran.

Dans un autre mode de réalisation (non représenté), le support 22 est fixe et ne peut être mis en mouvement. Ce mode de réalisation peut notamment être adapté au cas où le support 22 comporte un lecteur de carte disposé de telle sorte que, dans une configuration particulière du support 22, l'insertion d'une carte masque la partie 40 de l'écran.

Afin de garantir qu'aucune application logicielle pirate ne peut s'exécuter lorsque les fonctions de transaction électronique sont activées, le terminal est équipé de deux microprocesseurs. L'un des deux microprocesseurs est un microprocesseur conventionnel utilisé dans les terminaux de type assistant personnel. Le microprocesseur principal applicatif permet de traiter des données non confidentielles. L'autre microprocesseur est un microprocesseur sécurisé. Une application logicielle ne peut être exécutée par le microprocesseur sécurisé que si cette application est identifiée par le microprocesseur sécurisé. On prévient ainsi l'exécution d'applications logicielles pirates par ce microprocesseur. Le microprocesseur sécurisé est destiné à traiter des données confidentielles.

Selon l'invention, le terminal est équipé d'un commutateur comprenant au moins deux positions, une première position dans laquelle l'écran 10 à dalle tactile est relié fonctionnellement au microprocesseur sécurisé pour afficher des images transmises par le microprocesseur sécurisé, et une seconde position dans laquelle l'écran à dalle tactile est relié fonctionnellement au microprocesseur principal applicatif pour afficher des images transmises par le microprocesseur principal applicatif, le commutateur étant relié au support de manière à être dans la première position lorsque les fonctions de transaction électronique sont activées, et dans la seconde position lorsque les fonctions de transaction électronique sont inhibées.

On se réfère à la figure 4. Selon un mode de réalisation avantageux, le microprocesseur sécurisé contrôle uniquement l'affichage de la partie visible 21 de l'écran lorsque les fonctions de transaction électronique sont activées. La partie cachée 40 est désactivé ou inhibée. De cette manière, la taille des images devant être traitées par le microprocesseur sécurisé est réduite.

## Revendications

1. Terminal comportant :
• un ecran (10);
• un microprocesseur sécurisé destiné à traiter des données confidentielles ;
• un microprocesseur principal applicatif, destiné à traiter des données non confidentielles ;
• un support (22) le support (22) présente au moins deux positions sur lequel est monté un clavier mécanique (25) destiné à saisir des informations confidentielles,
ledit terminal comportant deux modes de fonctionnement, un premier mode de fonctionnement dans lequel des fonctions de transaction électronique du terminal sont inhibées, et un second mode de fonctionnement dans lequel les fonctions de transaction électronique sont activées, **caractérisé en ce qu'**il comporte un commutateur comprenant au moins deux positions, une première position dans laquelle l'écran (10) est relié fonctionnellement au microprocesseur sécurisé pour afficher des images transmises par le microprocesseur sécurisé, et une seconde position dans laquelle l'écran (10) est relié fonctionnellement au microprocesseur principal applicatif pour afficher des images transmises par le microprocesseur principal applicatif, le commutateur étant relié au support (22) de manière à être dans la première position lorsque les fonctions de transaction électronique sont activées, et dans la seconde position lorsque les fonctions de transaction électronique sont inhibées, le mouvement du support (22) d'une position à une autre faisant passer le terminal d'un mode de fonctionnement à un autre, ledit support (22) comportant un lecteur de carte la partie (40) de l'écran étant masquée lorsque les fonctions de transaction électronique sont activées :
- soit par une carte introduite par l'utilisateur dans le lecteur de carte du support (22) ;
- soit par le support (22) et par une carte introduite dans le lecteur de carte du support (22).

2. Terminal de transaction selon la revendication 1 **caractérisé en ce que** le support (22) est un support mobile en rotation.

3. Terminal selon la revendication 2 **caractérisé en ce que** le support (22) est en rotation autour d'un axe (30) perpendiculaire à l'écran (10).

4. Terminal selon la revendication 2 **caractérisé en ce que** le support (22) est en rotation autour d'un axe (32) parallèle à l'écran (10).

5. Terminal de transaction selon la revendication 1 dans lequel le support (22) est un support mobile en translation.

6. Terminal selon la revendication 5 **caractérisé en ce que** le support (22) est en translation contrainte par au moins un guide (31) parallèle à l'écran (10).

7. Terminal selon la revendication 1 **caractérisé en ce que** le support (22) comporte un lecteur de carte, le fonctionnement du lecteur de carte du support (22) étant inhibé lorsque les fonctions de transaction électronique sont inhibées.

8. Terminal selon la revendication 7 **caractérisé en ce que** le lecteur de carte du support (22) est inhibé en bloquant l'entrée (31) de la carte au moyen d'une plaque (32) fixée au corps du terminal pour obturer l'entrée (31) de la carte à puce lorsque le support (22) est dans la position dans laquelle les fonctions de transaction électronique sont inhibées.

## Patentansprüche

1. Endgerät, das Folgendes umfasst:
• einen Bildschirm (10);
• einen gesicherten Mikroprozessor zum Verarbeiten von vertraulichen Daten;
• einen Hauptanwendungsmikroprozessor zum Verarbeiten von nichtvertraulichen Daten;
• eine Auflage (22) mit wenigstens zwei Positionen, auf der eine mechanische Tastatur (25) zum Erfassen von vertraulichen Informationen montiert ist,
wobei das Endgerät zwei Betriebsarten hat, eine erste Betriebsart, in der elektronische Transaktionsfunktionen des Endgeräts gesperrt sind, und eine zweite Betriebsart, in der die elektronischen Transaktionsfunktionen aktiviert sind, **dadurch gekennzeichnet, dass** es einen Schalter mit wenigstens zwei Positionen umfasst, einer ersten Position, in der der Bildschirm (10) funktionell mit dem gesicherten Mikroprozessor verbunden ist, zum Anzeigen von von dem gesicherten Mikroprozessor übertragenen Bildern, und einer zweiten Position, in der der Bildschirm (10) funktionell mit dem Hauptanwendungsmikroprozessor verbunden ist, zum Anzeigen von vom Hauptanwendungsmikroprozessor übertragenen Bildern, wobei der Schalter so mit der Auflage (22) verbunden ist, dass er in der ersten Position ist, wenn die elektronischen Transaktionsfunktionen aktiviert sind, und in der zweiten Position ist, wenn die elektronischen Transaktionsfunktionen gesperrt sind, wobei die Bewegung der Auflage (22) von einer Position in eine andere bewirkt, dass das Endgerät von einer Betriebsart in eine andere übergeht, wobei die Auflage (22) einen Kartenleser hat, wobei, wenn die elektronischen Transaktionsfunktionen aktiviert sind, der Teil (40) des Bildschirms verdeckt ist:
- entweder durch eine Karte, die vom Benutzer in den Kartenleser der Auflage (22) eingesteckt wird;
- oder durch die Auflage (22) und durch eine in den Kartenleser der Auflage (22) eingesteckte Karte.

2. Transaktionsendgerät nach Anspruch 1, **dadurch gekennzeichnet, dass** die Auflage (22) eine rotationsbewegliche Auflage ist.

3. Endgerät nach Anspruch 2, **dadurch gekennzeichnet, dass** die Auflage (22) um eine Achse (30) lotrecht zum Bildschirm (10) rotiert.

4. Endgerät nach Anspruch 2, **dadurch gekennzeichnet, dass** die Auflage (22) um eine Achse (32) parallel zum Bildschirm (10) rotiert.

5. Transaktionsendgerät nach Anspruch 1, bei dem die Auflage (22) eine translationsbewegliche Auflage ist.

6. Endgerät nach Anspruch 5, **dadurch gekennzeichnet, dass** die Auflage (22) translational durch wenigstens eine Führung (31) parallel zum Bildschirm (10) eingeschränkt wird.

7. Endgerät nach Anspruch 1, **dadurch gekennzeichnet, dass** die Auflage (22) einen Kartenleser umfasst, wobei die Funktion des Kartenlesers der Auflage (22) gesperrt ist, wenn die elektronischen Transaktionsfunktionen gesperrt sind.

8. Endgerät nach Anspruch 7, **dadurch gekennzeichnet, dass** der Kartenleser der Auflage (22) gesperrt wird, indem der Karteneinlass (31) mit einer am Körper des Endgeräts befestigten Platte (32) blockiert wird, um den Chipkarteneinlass (31) zu verdecken, wenn die Auflage (22) in der Position ist, in der die elektronischen Transaktionsfunktionen gesperrt sind.

## Claims

1. A terminal comprising:
• a screen (10);
• a secure microprocessor designed to process confidential data;
• a main application microprocessor designed to process non-confidential data;
• a support (22), on which a mechanical keyboard (25) designed for entering confidential information is mounted, with said support (22) having at least two positions,
said terminal comprising two operating modes, a first operating mode in which electronic transaction functions of the terminal are inhibited, and a second operating mode in which the electronic transaction functions are enabled, **characterised in that** it comprises a switch comprising at least two positions, a first position in which said screen (10) is operationally linked to the secure microprocessor so as to display images transmitted by said secure microprocessor, and a second position in which said screen (10) is operationally linked to said main application microprocessor so as to display images transmitted by said main application microprocessor, said switch being linked to said support (22) so as to be in the first position when the electronic transaction functions are enabled and in the second position when the electronic transaction functions are inhibited, with the movement of said support (22) from one position to another position changing the terminal from one operating mode to another, said support (22) comprising a card reader, with the part (40) of the screen being hidden when the electronic transaction functions are enabled:
- either by a card introduced by the user into the card reader of said support (22);
- or by said support (22) and by a card introduced into the card reader of said support (22).

2. The transaction terminal according to claim 1, **characterised in that** said support (22) is a rotationally mobile support.

3. The terminal according to claim 2, **characterised in that** said support (22) rotates around an axis (30) perpendicular to said screen (10).

4. The terminal according to claim 2, **characterised in that** said support (22) rotates around an axis (32) parallel to said screen (10).

5. The transaction terminal according to claim 1, wherein said support (22) is a translationally mobile support.

6. The terminal according to claim 5, **characterised in that** said support (22) is constrained in its translational movement by at least one guide (31) parallel to said screen (10).

7. The terminal according to claim 1, **characterised in that** said support (22) comprises a card reader, the operation of said card reader of said support (22) being inhibited when the electronic transaction functions are inhibited.

8. The terminal according to claim 7, **characterised in that** said card reader of said support (22) is inhibited by blocking the entry (31) of the card by means of a plate (32) fixed to the body of the terminal so as to obstruct the entry (31) of the chip card when said support (22) is in the position in which the electronic transaction functions are inhibited.
